# EUROPEAN PATENT APPLICATION

(11) **EP 4 246 642 A1**
(43) Date of publication of application: **20.09.2023**
(21) Application number: 23161304.3
(22) Date of filing: 10.03.2023
(51) Int. Cl.: H01M 10/056

(54) **ELECTROLYTIC MATERIAL AND SECONDARY BATTERY**

(30) Priority: 18.03.2022 JP 2022044668
(71) Applicant: TOYOTA JIDOSHA KABUSHIKI KAISHA, Aichi-Ken 471-8571 (JP)
(72) Inventor: MINAMI, Keiichi, Toyota-shi, 471-8571 (JP)
(74) Representative: J A Kemp LLP

(57) **Abstract**

Disclosed is a technique capable of improving the filling rate of an electrolytic material and inhibiting a decrease in ionic conductivity of the electrolytic material. The electrolytic material of the present disclosure is an electrolytic material used in secondary cells, comprising a sulfide solid electrolyte and an alkali metal salt, wherein the alkali metal salt comprises a quaternary ammonium cation, an alkali metal ion, and a bistrifluoromethanesulfonylamide anion.

## Description

### FIELD

The present application discloses an electrolytic material and a secondary battery.

### BACKGROUND

PTL 1 discloses that two sulfide solid electrolytes having different particle sizes are combined as a solid electrolyte constituting a solid electrolyte layer to improve ionic conductivity and filling rate of the solid electrolyte layer. PTL 2 discloses that a sulfide solid electrolyte and an ionic liquid are contained in an active material layer to improve ionic conductivity of the active material layer. PTL 3 discloses a molten salt of LiFTA and CsFTA/KFTA as an electrolytic material for operating at a medium temperature.

### [CITATION LIST]

### [PATENT LITERATURE]

[PTL 1] Japanese Unexamined Patent Publication No. 2013-157084
[PTL 2] Japanese Unexamined Patent Publication No. 2019-121455
[PTL 3] Japanese Unexamined Patent Publication No. 2013-084548

### SUMMARY

### [TECHNICAL PROBLEM]

As disclosed in PTL 1, increasing the filling rate of a solid electrolyte in a secondary battery is effective in improving the performance of the secondary battery using the solid electrolyte. However, a sulfide solid electrolyte has a high Young's modulus, and increasing the filling rate thereof has a limit.

A sulfide solid electrolyte can be combined with an additional component, whereby the additional component fills in the gaps between sulfide solid electrolyte particles, increasing the filling rate thereof. However, in this case, there is a risk of gradually decreasing ionic conductivity due to a reaction between the sulfide solid electrolyte and the additional component.

### [SOLUTION TO PROBLEM]

As a means for solving the above problem, the present application discloses
an electrolytic material, comprising a sulfide solid electrolyte and an alkali metal salt, wherein
the alkali metal salt comprises a quaternary ammonium cation, an alkali metal ion, and a bistrifluoromethanesulfonylamide (TFSA) anion.

In the electrolytic material of the present disclosure, the quaternary ammonium cation may be a tetrabutylammonium (TBA) cation.

In the electrolytic material of the present disclosure, the alkali metal ion may be a lithium ion.

In the electrolytic material of the present disclosure,
the quaternary ammonium cation may be a tetrabutylammonium (TBA) cation,
the alkali metal ion may be a lithium ion, and
a ratio of the alkali metal salt to a total of the sulfide solid electrolyte and the alkali metal salt may be 40% by mass or less.

As a means for solving the above problem, the present application discloses
a secondary battery, comprising a positive electrode, an electrolyte layer, and a negative electrode, wherein
at least one of the positive electrode, the electrolyte layer, and the negative electrode comprises the above electrolytic material of the present disclosure.

### [ADVANTAGEOUS EFFECTS]

The electrolytic material of the present disclosure tends to have a high filling rate when applied to a secondary battery. In addition, the sulfide solid electrolyte and the alkali metal salt do not easily react with each other, and a decrease in ionic conductivity is easily inhibited.

### BRIEF DESCRIPTION OF DRAWINGS

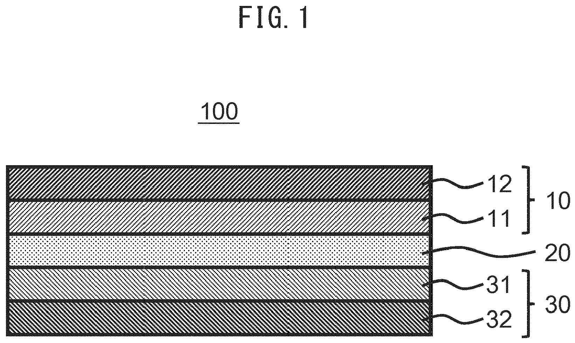

FIG. 1 schematically shows a configuration of a secondary battery.

### DESCRIPTION OF EMBODIMENTS

### 1. Electrolytic material

The electrolytic material of the present disclosure comprises a sulfide solid electrolyte and an alkali metal salt. The alkali metal salt comprises a quaternary ammonium cation, an alkali metal ion, and a bistrifluoromethanesulfonylamide (TFSA) anion.

### 1.1 Sulfide solid electrolyte

Any sulfide solid electrolyte used as a solid electrolyte for secondary batteries can be adopted. The sulfide solid electrolyte may comprise at least an alkali metal and S as constituent elements. The alkali metal may be determined according to the carrier ion to be conducted. When the electrolytic material of the present disclosure is applied to a lithium-ion secondary battery, the sulfide solid electrolyte may comprise Li as the alkali metal. Particularly, sulfide solid electrolytes comprising at least Li, S, and P as constituent elements have high performance, and sulfide solid electrolytes based on a Li₃PS₄ framework and comprising at least one halogen also have high performance. Examples of the sulfide solid electrolyte include Li₂S-P₂S₅, Li₂S-SiS₂, LiI-Li₂S-SiS₂, LiI-Si₂S-P₂S₅, Li₂S-P₂S₅-LiI-LiBr, LiI-Li₂S-P₂S₅, LiI-Li₂S-P₂O₅, LiI-Li₃PO₄-P₂S₅, and Li₂S-P₂S₅-GeS₂. The sulfide solid electrolyte may be amorphous or crystalline. The sulfide solid electrolyte may be, for example, particulate. One type of sulfide solid electrolyte may be used alone, or two or more types thereof may be used in combination.

### 1.2 Alkali metal salt

The alkali metal salt comprises a quaternary ammonium cation, an alkali metal ion, and a bistrifluoromethanesulfonylamide (TFSA) anion. The form of the alkali metal salt is not particularly limited as long as these cations and anion are contained. For example, in the electrolytic material of the present disclosure, the alkali metal salt may be a molten salt comprising a quaternary ammonium cation, an alkali metal ion, and a TFSA anion. A molten salt refers to a product obtained by mixing and melting multiple salts into one. When there are a plurality of cations constituting the alkali metal salt (the alkali metal salt comprises a plurality of salts), the melting point of the alkali metal salt is lowered, likely making the alkali metal salt more suitable as an electrolytic material. The alkali metal salt may melt at, for example, 100 °C or lower, 90 °C or lower, 80 °C or lower, or 70 °C or lower to exhibit fluidity. Note that, the alkali metal salt may be solid when the electrolytic material is molded (when the secondary battery is manufactured).

### 1.2.1 Quaternary ammonium cation

By including a quaternary ammonium cation in the alkali metal salt, the Young's modulus of the alkali metal salt decreases. In the case of the alkali metal salt having a low Young's modulus, when the electrolytic material of the present disclosure is molded, the alkali metal salt can fill in the gaps between sulfide solid electrolytes. As a result, the filling rate of the electrolytic material is easily increased. In addition, the alkali metal salt in the gaps between sulfide solid electrolytes can be expected to function as ion conducting paths.

According to the findings of the present inventors, any type of the quaternary ammonium cation constituting the alkali metal salt has low reactivity with the sulfide solid electrolyte (as will be described later, anions affect the reactivity with sulfide solid electrolytes). Further, any type of organic cation such as a quaternary ammonium cation can decrease the Young's modulus of an alkali metal salt. Therefore, in the electrolytic material of the present disclosure, the type of quaternary ammonium cation constituting the alkali metal salt is not particularly limited. Examples of the quaternary ammonium cation include cations comprising a functional group having 1 or more and 10 or less carbon atoms. Specific examples thereof include a tetrabutylammonium (TBA) cation, a tetrapropylammonium (TPA) cation, a tetraethylammonium (TEA) cation, a tetramethylammonium (TMA) cation, a tetraamylammonium (TAA) cation, a tetrahexylammonium (THA) cation, a tetraoctylammonium (TOA) cation, and a tetradecylammonium (TDA) cation. The quaternary ammonium cation may comprise functional groups different from each other in the number of carbon atoms. For example, the quaternary ammonium cation may have a first functional group having 1 or more and 10 or less carbon atoms and a second functional group having 1 or more and 10 or less and being different from the first functional group. Examples of such a cation include a trimethylpropylammonium cation. As far as the present inventors have confirmed, when the quaternary ammonium cation is a tetrabutylammonium (TBA) cation, an electrolytic material having superior ionic conductivity can be easily obtained. The alkali metal salt may comprise only one type of quaternary ammonium cation or two or more types thereof.

### 1.2.2 Alkali metal ion

The alkali metal ion may be determined according to the carrier ion to be conducted. When the electrolytic material of the present disclosure is used in a lithium-ion secondary battery, the alkali metal ion may be a Li ion. Specifically, since the same cation as the carrier ion in the secondary battery is included in the alkali metal salt, the alkali metal salt easily exhibits the desired ionic conductivity in the temperature region in which the alkali metal salt exhibits fluidity, as will be described later. The alkali metal salt may comprise only one type of alkali metal ion or two or more types thereof.

### 1.2.3 Additional cation

The cation constituting the alkali metal salt may consist of only the above quaternary ammonium cation and alkali metal ion, or may comprise an additional cation as long as the desired effect is exhibited. From the viewpoint of further increasing the effect of the electrolytic material of the present disclosure, the total ratio of the above quaternary ammonium cation and alkali metal ion in all cations constituting the alkali metal salt may be 80 mol% or greater, 90 mol% or greater, 95 mol% or greater, 99 mol% or greater, or 100 mol%.

### 1.2.4 Molar ratio of cations

The molar ratio between the quaternary ammonium cation and the alkali metal ion that constitute the alkali metal salt is not particularly limited. As described above, when the alkali metal salt comprises a quaternary ammonium cation and an alkali metal ion, compared to when each is contained alone, the melting point of the alkali metal salt is lowered. From the viewpoint of significantly lowering the melting point of the alkali metal salt, the molar ratio of quaternary ammonium cation to alkali metal ion may be 30:70 to 70:30, or may be 40:60 to 60:40.

### 1.2.5 TFSA anion

According to the findings of the present inventors, the reactivity of the alkali metal salt with the sulfide solid electrolyte changes according to the type of anion constituting the alkali metal salt. For example, a fluorosulfonyl(trifluoromethanesulfonyl)amide (FTA) anion or a fluorosulfonylamide (FSA) anion is strongly polar and easily reacts with the above sulfide solid electrolyte. On the other hand, a TFSA anion has weak dissociation and is weakly polar, and thus does not easily react with the above sulfide solid electrolyte. Therefore, an alkali metal salt comprising a TFSA anion has low reactivity with a sulfide solid electrolyte and does not easily reduce the ionic conductivity of the sulfide solid electrolyte. The alkali metal salt constituting the electrolytic material of the present disclosure may be substantially free of anions other than the TFSA anion. However, other anions may be contained as long as the desired effect is exhibited. From the viewpoint of further enhancing the effect of the electrolytic material of the present disclosure, the ratio of TFSA anion to all anions constituting the alkali metal salt may be 80 mol% or greater, 90 mol% or greater, 95 mol% or greater, 99 mol% or greater, or 100 mol%.

### 1.3 Mass ratio of sulfide solid electrolyte to alkali metal salt

In the electrolytic material of the present disclosure, the mass ratio of sulfide solid electrolyte to alkali metal salt is not particularly limited. For example, the ratio of sulfide solid electrolyte to the total of sulfide solid electrolyte and alkali metal salt as 100% by mass may be 40% by mass or greater and less than 100% by mass, 50% by mass or greater and less than 100% by mass, 60% by mass or greater and less than 100% by mass, 70% by mass or greater and less than 100% by mass, or 80% by mass or greater and less than 100% by mass. The ratio of alkali metal salt may be greater than 0% by mass and 60% by mass or less, greater than 0% by mass and 50% by mass or less, greater than 0% by mass and 40% by mass or less, greater than 0% by mass and 30% by mass or less, or greater than 0% by mass and 20% by mass or less.

According to the findings of the present inventors, when the quaternary ammonium cation constituting the alkali metal salt is a tetrabutylammonium (TBA) cation and the alkali metal ion is a lithium ion, and the ratio of alkali metal salt to the total of sulfide solid electrolyte and alkali metal salt (specifically TBA-Li-TFSA) is 40% by mass or less, the activation energy for ion conduction of the electrolytic material is lowered compared to the sulfide solid electrolyte alone in the temperature region of 60 °C or higher. Specifically, a mixture of a sulfide solid electrolyte and an alkali metal salt exhibits higher ionic conductivity than the sulfide solid electrolyte alone. It is considered that at 60 °C or higher, the alkali metal salt is in a molten state and due to the synergistic effect of the molten alkali metal salt and the sulfide solid electrolyte, alkali metal ions (lithium ions) are easily conducted. In this case, the ratio of alkali metal salt to the total of sulfide solid electrolyte and alkali metal salt may be 35% by mass or less, 30% by mass or less, 25% by mass or less, or 20% by mass or less.

### 1.4 Optional component

In the electrolytic material of the present disclosure, the above sulfide solid electrolyte and alkali metal salt may be combined with an additional component. The additional component can be appropriately determined according to the specific application of the electrolytic material. For example, when the electrolytic material is used as an electrode material in a secondary battery, the electrolytic material may be combined with an active material, a conductive aid, and a binder. When the electrolytic material is used as a material constituting an electrolyte layer in a secondary battery, the electrolytic material may be combined with a binder. Moreover, the electrolytic material may comprise an electrolyte (solid electrolyte or liquid electrolyte other than sulfide solid electrolytes) in addition to the sulfide solid electrolyte and the alkali metal salt. Furthermore, the electrolytic material of the present disclosure may comprise various additives. These optional components will be described in detail in the following description of the secondary battery.

### 2. Secondary battery

As shown in FIG. 1, the secondary battery 100 according to one embodiment comprises a positive electrode 10, an electrolyte layer 20, and a negative electrode 30. At least one of the positive electrode 10, the electrolyte layer 20, and the negative electrode 30 comprises the above electrolytic material of the present disclosure. As described above, the electrolytic material of the present disclosure can be filled at a high filling rate, and ionic conductivity therein is easily maintained. In this regard, by including the electrolytic material of the present disclosure in at least one of the positive electrode 10, the electrolyte layer 20, and the negative electrode 30 of the secondary battery 100, the performance of the secondary battery 100 is easily enhanced. Note that, the above electrolytic material of the present disclosure can be contained as a solid electrolytic material in the secondary battery 100, and a liquid electrolyte or a liquid additive may be used in combination therewith. Specifically, the secondary battery 100 may be an all-solid-state battery, or may contain a solid electrolyte and a liquid.

### 2.1 Positive electrode

As shown in FIG. 1, the positive electrode 10 according to one embodiment may comprise a positive electrode active material layer 11 and a positive electrode current collector 12. In this case, the positive electrode active material layer 11 may comprise the above electrolytic material.

### 2.1.1 Positive electrode active material layer

The positive electrode active material layer 11 comprises a positive electrode active material, and may optionally comprise an electrolyte, a conductive aid, and a binder. Further, the positive electrode active material layer 11 may additionally comprise various additives. When the positive electrode active material layer 11 comprises the above electrolytic material of the present disclosure, the positive electrode active material layer 11 comprises a positive electrode active material in addition to the electrolytic material, and can optionally comprise an additional electrolyte, a conductive aid, a binder, and various additives. The content of each of the positive electrode active material, electrolyte, conductive aid, and binder in the positive electrode active material layer 11 may be appropriately determined according to the target performance of a battery. For example, the content of the positive electrode active material to the entire positive electrode active material layer 11 (total solid content) as 100% by mass may be 40% by mass or greater, 50% by mass or greater, or 60% by mass or greater, and may be less than 100% by mass or 90% by mass or less. The shape of the positive electrode active material layer 11 is not particularly limited, and may be, for example, a sheet having a substantially flat surface. The thickness of the positive electrode active material layer 11 is not particularly limited, and may be, for example, 0.1 µm or more, 1 µm or more, 10 µm or more, or 30 µm or more, and may be 2 mm or less, 1 mm or less, 500 µm or less, or 100 µm or less.

A known positive electrode active material for secondary batteries may be used as the positive electrode active material. Of known active materials, materials exhibiting a potential (charge/discharge potential) at which predetermined ions are stored and released that is more electropositive than that of the negative electrode active material described below can be used as the positive electrode active material. For example, when constituting a lithium-ion secondary battery, various lithium-containing composite oxides, such as lithium cobalt oxide, lithium nickel oxide, lithium manganese oxide, lithium manganese-nickel-cobalt oxide, and lithium spinel compounds, may be used. One type of positive electrode active material may be used alone, or two or more types thereof may be used in combination. The positive electrode active material may be, for example, a particle, and the size thereof is not particularly limited. The particle of the positive electrode active material may be a solid particle or a hollow particle. The particle of the positive electrode active material may be a primary particle or a secondary particle of a plurality of agglomerated primary particles. The average particle diameter (D50) of the particles of the positive electrode active material may be, for example, 1 nm or more, 5 nm or more, or 10 nm or more, and may be 500 µm or less, 100 µm or less, 50 µm or less, or 30 µm or less. It should be noted that the average particle diameter D50 is the particle diameter (median size) at an integrated value of 50% in a volume-based particle diameter distribution obtained by the laser diffraction/scattering method.

The surface of the positive electrode active material may be covered by a protective layer containing a lithium-ion conductive oxide. Specifically, a composite comprising the above positive electrode active material and a protective layer provided on the surface thereof may be contained in the positive electrode active material layer 11, whereby a reaction between the positive electrode active material and a sulfide (for example, the sulfide solid electrolyte described above) can be easily suppressed. Examples of the lithium-ion conductive oxide include Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, and Li₂WO₄. The coverage (area ratio) of the protective layer may be, for example, 70% or greater, 80% or greater, or 90% or greater. The thickness of the protective layer may be, for example, 0.1 nm or more or 1 nm or more, and may be 100 nm or less or 20 nm or less.

The electrolyte that can be contained in the positive electrode active material layer 11 may be a solid electrolyte, a liquid electrolyte (electrolytic solution), or a combination thereof.

The solid electrolyte may be the above electrolytic material of the present disclosure or another solid electrolyte. A known solid electrolyte for secondary batteries may be used as a solid electrolyte other than the above electrolytic material of the present disclosure. The solid electrolyte may be an inorganic solid electrolyte or an organic polymer electrolyte. Particularly, an inorganic solid electrolyte has excellent ion conductivity and heat resistance. Other than the sulfide solid electrolyte described above, oxide solid electrolytes such as lithium lanthanum zirconate, LiPON, Li₁₊ₓAlₓGe₂₋ₓ(PO₄)₃, Li-SiO-based glass, and Li-Al-S-O-based glass can be exemplified as the inorganic solid electrolyte. Sulfide solid electrolytes, particularly sulfide solid electrolytes comprising at least Li, S, and P as constituent elements, have high performance. The solid electrolyte may be amorphous or crystalline. The solid electrolyte may be, for example, particulate. One type of solid electrolyte may be used alone, or two or more types thereof may be used in combination.

The electrolytic solution can comprise, for example, a lithium ion as the carrier ion. The electrolytic solution may be, for example, a nonaqueous electrolytic solution. For example, an alkali metal salt dissolved in a carbonate-based solvent at a predetermined concentration can be used as the electrolytic solution. Examples of the carbonate-based solvent include fluoroethylene carbonate (FEC), ethylene carbonate (EC), and dimethyl carbonate (DMC). Examples of the alkali metal salt include hexafluorophosphate.

Examples of the conductive aid that can be contained in the positive electrode active material layer 11 include carbon materials such as vapor-grown carbon fibers (VGCF), acetylene black (AB), Ketjen black (KB), carbon nanotubes (CNT), and carbon nanofibers (CNF); and metal materials such as nickel, aluminum, and stainless steel. The conductive aid may be, for example, particulate or fibrous, and the size thereof is not particularly limited. One type of conductive aid may be used alone, or two or more types thereof may be used in combination.

Examples of the binder that can be contained in the positive electrode active material layer 11 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders, and polyacrylic acid-based binders. One type of binder may be used alone, or two or more types thereof may be used in combination.

### 2.1.2 Positive electrode current collector

As shown in FIG. 1, the positive electrode 10 may comprise a positive electrode current collector 12 in contact with the above positive electrode active material layer 11. Any material generally used as a positive electrode current collector for batteries can be adopted as the positive electrode current collector 12. In addition, the positive electrode current collector 12 may be in the form of a foil, a plate, a mesh, a perforated (punched) metal, or a foam body. The positive electrode current collector 12 may be comprised of a metal foil or a metal mesh. Particularly, a metal foil has excellent handleability. The positive electrode current collector 12 may be formed of a plurality of foils. Examples of the metal constituting the positive electrode current collector 12 include Cu, Ni, Cr, Au, Pt, Ag, Al, Fe, Ti, Zn, Co, and stainless steel. Particularly, from the viewpoint of ensuring oxidation resistance, the positive electrode current collector 12 may comprise Al. For the purpose of adjusting resistance and etc., the surface of the positive electrode current collector 12 may have some coating layer. Further, the above metals may be plated or vapor-deposited onto a metal foil or a substrate for the positive electrode current collector 12. When the positive electrode current collector 12 comprises a plurality of metal foils, some layer may be included between the plurality of metal foils. The thickness of the positive electrode current collector 12 is not particularly limited. The thickness may be, for example, 0.1 µm or more or 1 µm or more, and may be 1 mm or less or 100 µm or less.

In addition to the above configuration, the positive electrode 10 may be provided with any configuration generally used for a positive electrode of a secondary battery, for example, a tab or a terminal. The positive electrode 10 can be manufactured by applying a known method. For example, the positive electrode active material layer 11 can be easily formed by dry- or wet-molding a positive electrode mixture containing the various components above. The positive electrode active material layer 11 may be molded together with the positive electrode current collector 12 or separately from the positive electrode current collector 12.

2.2 Electrolyte layer

The electrolyte layer 20 comprises at least an electrolyte. The electrolyte layer 20 may comprise a solid electrolyte and optionally a binder. When the electrolyte layer 20 comprises the above electrolytic material of the present disclosure, the electrolyte layer 20 may further comprise an additional electrolyte, a binder, and various additives in addition to the electrolytic material. In this case, the contents of the solid electrolyte and binder in the electrolyte layer 20 are not particularly limited. Alternatively, the electrolyte layer 20 may comprise an electrolytic solution, and may further include a separator for retaining the electrolytic solution and preventing contact between the positive electrode active material layer 11 and the negative electrode active material layer 31. The thickness of the electrolyte layer 20 is not particularly limited, and may be, for example, 0.1 µm or more or 1 µm or more, and may be 2 mm or less or 1 mm or less.

The electrolyte contained in the electrolyte layer 20 may be appropriately selected from the electrolyte constituting the above electrolytic material of the present disclosure or the electrolytes exemplified as an electrolyte that can be contained in the positive electrode active material layer described above. The binder that can be contained in the electrolyte layer 20 may also be appropriately selected from the binders exemplified as a binder that can be contained in the positive electrode active material layer described above. For each of the electrolyte and the binder, one type may be used alone, or two or more types may be used in combination. The separator may be a separator commonly used in secondary batteries. Examples thereof include separators made of resins such as polyethylene (PE), polypropylene (PP), polyester, and polyamide. The separator may be of a single-layer structure or a multilayer structure. Examples of a separator having a multilayer structure include separators having a two-layer structure such as PE/PP and separators having a three-layer structure such as PP/PE/PP and PE/PP/PE. The separator may be formed of a nonwoven fabric such as a cellulose nonwoven fabric, a resin nonwoven fabric, or a glass fiber nonwoven fabric.

### 2.3 Negative electrode

As shown in FIG. 1, the negative electrode 30 according to one embodiment may comprise a negative electrode active material layer 31 and a negative electrode current collector 32. In this case, the negative electrode active material layer 31 may comprise the above electrolytic material.

### 2.3.1 Negative electrode active material layer

The negative electrode active material layer 31 comprises a negative electrode active material, and may optionally comprise an electrolyte, a conductive aid, and a binder. Further, the negative electrode active material layer 31 may additionally comprise various additives. When the negative electrode active material layer 31 comprises the above electrolytic material of the present disclosure, the negative electrode active material layer 31 comprises a negative electrode active material in addition to the electrolytic material, and can optionally comprise an additional electrolyte, a conductive aid, a binder, and various additives. The content of each of the negative electrode active material, electrolyte, conductive aid, and binder in the negative electrode active material layer 31 may be appropriately determined according to the target performance of a battery. For example, the content of the negative electrode active material to the entire negative electrode active material layer 31 (total solid content) as 100% by mass may be 40% by mass or greater, 50% by mass or greater, or 60% by mass or greater, and may be less than 100% by mass or 90% by mass or less. The shape of the negative electrode active material layer 31 is not particularly limited, and may be, for example, a sheet having a substantially flat surface. The thickness of the negative electrode active material layer 31 is not particularly limited, and may be, for example, 0.1 µm or more, 1 µm or more, 10 µm or more, or 30 µm or more, and may be 2 mm or less, 1 mm or less, 500 µm or less, or 100 µm or less.

Various materials having a potential (charge/discharge potential) at which carrier ions are stored and released that is more electronegative than that of the above positive electrode active material can be adopted as the negative electrode active material. For example, silicon-based active materials such as Si, Si alloys, and silicon oxides; carbon-based active materials such as graphite and hard carbon; various oxide-based active materials such as lithium titanate; and metallic lithium and lithium alloys can be adopted. One type of negative electrode active material may be used alone, or two or more types thereof may be used in combination. The shape of the negative electrode active material may be any general shape for a negative electrode active material in secondary batteries. For example, the negative electrode active material may be particulate. The negative electrode active material particle may be a primary particle or a secondary particle of a plurality of agglomerated primary particles. The average particle diameter (D50) of the negative electrode active material particles may be, for example 1 nm or more, 5 nm or more, or 10 nm or more, and may be 500 µm or less, 100 µm or less, 50 µm or less, or 30 µm or less. Alternatively, the negative electrode active material may be in the form of a sheet (foil or film), such as a lithium foil. Specifically, the negative electrode active material layer 31 may consist of a negative electrode active material sheet.

Examples of an electrolyte that can be contained in the negative electrode active material layer 31 include the above electrolytic material of the present disclosure, the solid electrolyte and electrolytic solution described above, and a combination thereof. Examples of a conductive aid that can be contained in the negative electrode active material layer 31 include the carbon-based materials described above and the metal materials described above. A binder that can be contained in the negative electrode active material layer 31 may be appropriately selected from, for example, binders exemplified as a binder that can be contained in the positive electrode active material layer 11 described above. For each of the electrolyte, the conductive aid and the binder, one type may be used alone, or two or more types may be used in combination.

### 2.3.2 Negative electrode current collector

As shown in FIG. 1, the negative electrode 30 may comprise a negative electrode current collector 32 in contact with the above negative electrode active material layer 31. Any material generally used as a negative electrode current collector for batteries can be adopted as the negative electrode current collector 32. In addition, the negative electrode current collector 32 may be in the form of a foil, a plate, a mesh, a perforated (punched) metal, or a foam body. The negative electrode current collector 32 may be a metal foil or a metal mesh, and may alternatively be a carbon sheet. Particularly, a metal foil has excellent handleability. The negative electrode current collector 32 may be formed of a plurality of foils or sheets. Examples of the metal constituting the negative electrode current collector 32 include Cu, Ni, Cr, Au, Pt, Ag, Al, Fe, Ti, Zn, Co, and stainless steel. Particularly, from the viewpoint of ensuring reduction resistance and making alloying with lithium difficult, the negative electrode current collector 32 may comprise at least one metal selected from Cu, Ni, and stainless steel. For the purpose of adjusting resistance and etc., the surface of the negative electrode current collector 32 may have some coating layer. Further, the above metals may be plated or vapor-deposited onto a metal foil or a substrate for the negative electrode current collector 32. When the negative electrode current collector 32 consists of a plurality of metal foils, some layer may be included between the plurality of metal foils. The thickness of the negative electrode current collector 32 is not particularly limited. The thickness may be, for example, 0.1 µm or more or 1 µm or more, and may be 1 mm or less or 100 µm or less.

In addition to the above configuration, the negative electrode 30 may be provided with any configuration generally used for a negative electrode of a secondary battery, for example, a tab or a terminal. The negative electrode 30 can be manufactured by applying a known method. For example, the negative electrode active material layer 31 can be easily formed by dry- or wet-molding a negative electrode mixture containing the various components above. The negative electrode active material layer 31 may be molded together with the negative electrode current collector 32 or separately from the negative electrode current collector 32.

### 2.4 Additional features

The secondary battery 100 may be a battery in which each of the above components is housed inside an outer packaging. Any known outer packaging for batteries can be adopted as the outer packaging. In addition, a plurality of secondary batteries 100 may be optionally electrically connected and optionally stacked to form a battery pack. In this case, the battery pack may be housed inside a known battery case. The secondary battery 100 may additionally comprise obvious components such as the necessary terminals. Examples of a shape of the secondary battery 100 may include a coin, a laminate, a cylinder, and a rectangle.

The secondary battery 100 can be manufactured by applying a known method, for example, the following method. However, the method for manufacturing the secondary battery 100 is not limited to the following method, and each layer may be formed by, for example, dry molding.
(1) A positive electrode active material constituting a positive electrode active material layer is dispersed in a solvent to obtain a positive electrode layer slurry. The solvent used in this case is not particularly limited. Water and various organic solvents can be used, and the solvent may be N-methylpyrrolidone (NMP). The positive electrode layer slurry is applied to a surface of a positive electrode current collector using a doctor blade and then dried to form a positive electrode active material layer on the surface of the positive electrode current collector to obtain a positive electrode.
(2) A negative electrode active material constituting a negative electrode active material layer is dispersed in a solvent to obtain a negative electrode layer slurry. The solvent used in this case is not particularly limited. Water and various organic solvents can be used, and the solvent may be N-methylpyrrolidone (NMP). The negative electrode layer slurry is applied to a surface of a negative electrode current collector using a doctor blade and then dried to form a negative electrode active material layer on the surface of the negative electrode current collector to obtain a negative electrode.
(3) The layers are laminated such that an electrolyte layer (solid electrolyte layer or separator) is interposed between the negative electrode and the positive electrode, in the order of negative electrode current collector, negative electrode active material layer, electrolyte layer, positive electrode active material layer, and positive electrode current collector, to obtain a laminated body. Additional members such as terminals are attached to the laminated body as needed.
(4) The laminated body is housed in a battery case. In the case of an electrolytic solution battery, the battery case is filled with an electrolytic solution, the laminated body is immersed in the electrolytic solution, and the laminated body is sealed in the battery case to obtain a secondary battery. In the case of a battery comprising an electrolytic solution, the electrolytic solution may be included in the negative electrode active material layer, the separator, and the positive electrode active material layer in the above step (3).

### EXAMPLES

Hereinafter, the technique of the present disclosure will be described in detail with references to the Examples. However, the technique of the present disclosure is not limited to the following Examples.

### 1. Evaluation of filling rate

### 1.1 Comparative Example 1

A sulfide solid electrolyte based on a Li₃PS₄ framework was compacted and molded alone. The cross-section of the molded body was observed by SEM-EDX, and the porosity of the molded body was calculated to be 27.1%. Due to the high Young's modulus of the sulfide solid electrolyte, gaps between particles of the sulfide solid electrolyte could not be sufficiently eliminated by compacting and molding.

### 1.2 Example 1

Tetrabutylammonium bistrifluoromethanesulfonylamide (TBATFSA) and lithium trifluoromethanesulfonylamide (LiTFSA) were mixed at a molar ratio of 50:50 and completely melted at 100 °C. Thereafter, crystals solidified at room temperature were pulverized to obtain an alkali metal salt (molten salt) comprising TBA cations as the quaternary ammonium cation, Li ions as the alkali metal ion, and TFSA anions. The same sulfide solid electrolyte as in Comparative Example 1 and the molten salt were mixed in a mass ratio of sulfide solid electrolyte : molten salt = 80:20 to obtain an electrolytic material for evaluation. The resulting electrolytic material was compacted and molded under the same conditions as in Comparative Example 1. The cross-section of the molded body was observed by SEM-EDX, and the porosity of the molded body was calculated to be 19.8%. In Example 1, a molten salt comprising TBA cations was used in combination with a sulfide solid electrolyte. Due to molten salts comprising organic cations such as TBA cations having a low Young's modulus, the gaps between sulfide solid electrolyte particles are easily filled with the molten salt during compacting and molding. This is considered a reason why the filling rate after compacting and molding was increased as compared with Comparative Example 1.

### 1.3 Supplementary

The ratio of TBA cations in the molten salt is not particularly limited. As long as the molten salt comprises TBA cations, the Young's modulus of the molten salt decreases, and the effect of improving the filling rate described above can be obtained. However, when the molten salt does not comprise organic cations such as TBA cations, the Young's modulus of the molten salt does not decrease, and the effect of improving the filling rate is reduced.

### 2. Evaluation of maintenance rate of ionic conductivity

### 2.1 Example 2

An electrolytic material for evaluation was obtained in the same manner as in Example 1. The obtained electrolytic material was compacted and molded, and then placed in a thermostatic tank at 60 °C and retained therein for 168 h. From the impedances before and after retention, the maintenance rate ((ionic conductivity after retention for 168 h)/(ionic conductivity before retention for 168 h)) of ionic conductivity of the electrolytic material was calculated. The result is shown in Table 1 below.

### 2.2 Comparative Example 2

Except that lithium fluorosulfonyl(trifluoromethanesulfonyl)amide (LiFTA) and cesium fluorosulfonyl(trifluoromethanesulfonyl)amide (CsFTA) were mixed at a molar ratio of 50:50 to obtain a molten salt, an electrolytic material was obtained in the same manner as in Example 2, and the maintenance rate of ionic conductivity of the electrolytic material was calculated. The result is shown in Table 1 below.

### 2.3 Comparative Example 3

Except that lithium fluorosulfonylamide (LiFSA), sodium fluorosulfonylamide (NaFSA), and potassium fluorosulfonylamide (KFSA) were mixed at a molar ratio of 60:10:30 to obtain a molten salt, an electrolytic material was obtained in the same manner as in Example 2, and the maintenance rate of ionic conductivity of the electrolytic material was calculated. The result is shown in Table 1 below.

**[Table 1]**

| | Cation type | Anion type | Ionic conductivity reduction rate (%) |
|---|---|---|---|
| Example 2 | TBA-Li | TFSA | 100.8 |
| Comparative Example 2 | Li-Cs | FTA | 82.2 |
| Comparative Example 3 | Li-Na-K | FSA | 87.0 |

### 2.4 Results

As is clear from the results shown in Table 1, in the electrolytic material comprising a sulfide solid electrolyte and an alkali metal salt (molten salt), when the alkali metal salt included TBA cations, alkali metal ions, and TFSA anions (Example 2), even after endurance testing for 168 h, the ionic conductivity of the electrolytic material did not decrease as compared to that before endurance testing. On the other hand, when the alkali metal salt included FTA anions or FSA anions as the anion (Comparative Examples 2 and 3), the ionic conductivity of the electrolytic material decreased significantly after endurance testing. It is considered that in Comparative Examples 2 and 3, strongly polar anions such as FTA anions and FSA anions presumably reacted with the sulfide solid electrolyte, causing a deterioration or change of the sulfide solid electrolyte, and thereby significantly decreasing the ionic conductivity of the electrolytic material as a whole. In contrast, it is considered that since the TFSA anions as in Example 1 had low reactivity with the sulfide solid electrolyte and did not substantially deteriorate or change the sulfide solid electrolyte, high ionic conductivity was maintained in the electrolytic material as a whole.

### 3. Evaluation of ionic conductivity

### 3.1 Example 3

An electrolytic material for evaluation was obtained in the same manner as in Example 1. The obtained electrolytic material was compacted and molded, then heated from 25 °C to 100 °C, and thereafter cooled. The impedances during heating and cooling were each measured, and the activation energy Ea of ionic conductivity from 60 °C to 100 °C was calculated. The result is shown in Table 2 below.

### 3.2 Example 4

Except that the sulfide solid electrolyte and the molten salt were mixed at a mass ratio such that sulfide solid electrolyte : molten salt = 60:40, the activation energy Ea was calculated in the same manner as in Example 3. The result is shown in Table 2 below.

### 3.3 Example 5

Except that the sulfide solid electrolyte and the molten salt were mixed at a mass ratio such that sulfide solid electrolyte : molten salt = 40:60, the activation energy Ea was calculated in the same manner as in Example 3. The result is shown in Table 2 below.

### 3.4 Example 6

Except that the sulfide solid electrolyte and the molten salt were mixed at a mass ratio such that sulfide solid electrolyte : molten salt = 20:80, the activation energy Ea was calculated in the same manner as in Example 3. The result is shown in Table 2 below.

### 3.5 Comparative Example 4

Without mixing a molten salt, the activation energy Ea of the sulfide solid electrolyte alone was calculated. The result is shown in Table 2 below.

### 3.6 Comparative Example 5

Without mixing a sulfide solid electrolyte, the activation energy Ea of the molten salt alone was calculated. The result is shown in Table 2 below.

### [Table 2]

**(Table 2)**

| | Amount of molten salt (% by mass) | Ea (kJ/mol) |
|---|---|---|
| Comparative Example 4 | 0 | 25.9 |
| Example 3 | 20 | 24.2 |
| Example 4 | 40 | 25.7 |
| Example 5 | 60 | 32.6 |
| Example 6 | 80 | 40.0 |
| Comparative Example 5 | 100 | 57.9 |

### 3.7 Results

As shown in Table 2, when the quaternary ammonium cation constituting the alkali metal salt was a TBA cation and the alkali metal ion was a lithium ion, the activation energy for ion conduction of the electrolytic material was lowered compared to the sulfide solid electrolyte alone in the temperature region of 60 °C or higher by having the ratio of alkali metal salt to the total of sulfide solid electrolyte and alkali metal salt (TBA-Li-TFSA) at 40% by mass or less. That is, a mixture of a sulfide solid electrolyte and an alkali metal salt exhibited a higher ionic conductivity than the sulfide solid electrolyte alone. It is considered that at 60 °C or higher, the alkali metal salt was in a molten state and due to the synergistic effect of the molten alkali metal salt and the sulfide solid electrolyte, alkali metal ions (lithium ions) were easily conducted.

### 4. Supplementary

The sulfide solid electrolyte comprising Li and the alkali metal salt comprising Li ion were exemplified in the above description. However, it is considered that the same effect can be brought about by the same mechanism when an alkali metal other than Li is used. When the electrolytic material comprises Li as the alkali metal, the electrolytic material is suitable as an electrolytic material for lithium-ion secondary batteries. When the electrolytic material comprises Na as the alkali metal, the electrolytic material is suitable as an electrolytic material for sodium-ion secondary batteries. Similarly, it is considered that the electrolytic material of the present disclosure can be applied to potassium-ion secondary batteries.

### 5. Conclusion

From the above results, it is deemed that the filling rate can be improved and a decrease in ionic conductivity can be inhibited by an electrolytic material having the following features (1) and (2).
(1) The electrolytic material comprises a sulfide solid electrolyte and an alkali metal salt.
(2) The alkali metal salt comprises a quaternary ammonium cation, an alkali metal ion, and a bistrifluoromethanesulfonylamide anion.

In addition to the above features (1) and (2), an electrolytic material having the following features (3) to (5) is deemed to exhibit the above effect and high ionic conductivity in the temperature region of 60 °C or higher.
(3) The quaternary ammonium cation is a tetrabutylammonium cation.
(4) The alkali metal ion is a lithium ion.
(5) The ratio of the alkali metal salt to a total of the sulfide solid electrolyte and the alkali metal salt is 40% by mass or less.

### REFERENCE SIGNS LIST

- 10: positive electrode
- 11: positive electrode active material layer
- 12: positive electrode current collector

- 20: electrolyte layer
- 30: negative electrode

- 31: negative electrode active material layer
- 32: negative electrode current collector

- 100: secondary battery

## Claims

1. An electrolytic material, comprising a sulfide solid electrolyte and an alkali metal salt, wherein
the alkali metal salt comprises a quaternary ammonium cation, an alkali metal ion, and a bistrifluoromethanesulfonylamide anion.

2. The electrolytic material according to claim 1, wherein
the quaternary ammonium cation is a tetrabutylammonium cation.

3. The electrolytic material according to claim 1 or 2, wherein
the alkali metal ion is a lithium ion.

4. The electrolytic material according to any one of claims 1 to 3, wherein
the quaternary ammonium cation is a tetrabutylammonium cation,
the alkali metal ion is a lithium ion, and
a ratio of the alkali metal salt to a total of the sulfide solid electrolyte and the alkali metal salt is 40% by mass or less.

5. A secondary battery, comprising a positive electrode, an electrolyte layer, and a negative electrode, wherein
at least one of the positive electrode, the electrolyte layer, and the negative electrode comprises the electrolytic material according to any one of claims 1 to 4.
